Europäisches Patentamt

European Patent Office

Office européen des brevets

(19)

(11) Veröffentlichungsnummer : **0 371 300 B1**

(12) **EUROPÄISCHE PATENTSCHRIFT**

(45) Veröffentlichungstag der Patentschrift :
**22.07.92 Patentblatt 92/30**

(51) Int. Cl.$^5$ : **B60J 3/02**

(21) Anmeldenummer : **89120932.2**

(22) Anmeldetag : **11.11.89**

(54) **Sonnenblende für Fahrzeuge.**

(30) Priorität : **26.11.88 DE 3839965**

(43) Veröffentlichungstag der Anmeldung :
**06.06.90 Patentblatt 90/23**

(45) Bekanntmachung des Hinweises auf die
Patenterteilung :
**22.07.92 Patentblatt 92/30**

(84) Benannte Vertragsstaaten :
**DE ES FR GB IT SE**

(56) Entgegenhaltungen :
**DE-A- 3 008 361**
**DE-C- 3 601 762**
**GB-A- 1 201 017**

(73) Patentinhaber : **Gebr. Happich GmbH**
**Postfach 10 02 49 Clausenbrücke 1**
**W-5600 Wuppertal 1 (DE)**

(72) Erfinder : **Viertel, Lothar**
**Lilienstrasse 4**
**W-6636 Altforweiler (DE)**
Erfinder : **Welter, Patrick**
**Chemin de Romains**
**F-57730 La Chambre (FR)**

EP 0 371 300 B1

Jouve, 18, rue Saint-Denis, 75001 PARIS

**Beschreibung**

Die Erfindung bezieht sich auf eine Sonnenblende für Fahrzeuge mit einem Sonnenblendenkörper, der an einem Endbereich eines seiner Längsränder einen von einer Hülse umgriffenen, lösbar in die Lageraufnahme eines Gegenlagerböckchens einrastbaren Gegenlagerzapfen aufweist.

Eine Sonnenblende der gattungsgemäßen Art ist in der DE-A-30 08 361 beschrieben. Bei dieser bekannten Sonnenblende wird über den mit einer Hüllfolie umschweißten Gegenlagerzapfen eine Hülse, die eine in Längsrichtung verlaufende Trennaht aufweist, montiert. Die in der genannten Druckschrift im einzelnen geschilderten Maßnahmen haben sich, wie Versuche gezeigt haben, im praktischen Einsatz nicht bewährt. Neben herstellungstechnischer Schwierigkeiten hinsichtlich der Ausbildung des Verschlusses und des leichten Reißens des Filmscharniers, bekam man den für die Hülse erforderlichen Verdrehschutz nicht in den Griff.

Der Erfindung liegt nun, ausgehend von einer Sonnenblende der eingangs genannten Art, die Aufgabe zugrunde, die Hülse und den von dieser umgriffenen Gegenlagerzapfen so zu gestalten, daß eine unbedingt zuverlässige Festlegung dieser Teile aneinander gewährleistet ist, wobei weiterhin eine besonders kostengünstige Herstellbarkeit und Montierbarkeit sowie - nicht zuletzt - auch ein besonders gutes Aussehen angestrebt wird.

Diese Aufgabe wird erfindungsgemäß dadurch gelöst, daß die Hülse aus zwei Halbschalen besteht, deren Längsränder jeweils einen nach innen gerichteten hakenartigen Fortsatz aufweisen und daß der Gegenlagerzapfen mit zwei einander diametral gegenüberliegenden Nuten versehen ist, in denen die hakenartigen Fortsätze durch Einrasten gehalten sind.

Die Hülse besteht somit aus zwei besonders einfach und kostengünstig herzustellenden Bauteilen, die im Normalfall bauidentisch ausgebildet sind. Zur Montage werden die Halbschalen lediglich nacheinander auf den Gegenlagerzapfen, der vorher von der Hüllfolie befreit oder von vornherein hüllfolienfrei ausgebildet ist, aufgesetzt und durch leichten Druck klipsen dann die hakenartigen Fortsätze in die Nuten des Gegenlagerzapfens ein. Die Einbringung von Nuten in den Gegenlagerzapfen bedeutet keinen zusätzlichen Aufwand, weil sich diese bereits bei der Formgebung und beim Herstellungsprozeß des Gegenlagerzapfen realisieren lassen. Auf jeden Fall ist durch die Erfindung eine unbedingt zuverlässige Festlegung der Hülse am Gegenlagerzapfen gegeben.

In Weiterbildung der Erfindung kann vorgesehen sein, daß die aus zwei Halbschalen bestehende Hülse an beiden Endbereichen jeweils eine kelchförmige Erweiterung aufweist. Hierdurch läßt sich in einfacher Weise eine Abdeckung von Hüllfolienstümpfen und ein das gute Aussehen begünstigender fließender Übergang im Gegenlagerauge erzielen.

Bevorzugterweise sind die Halbschalen als Kunststoff-Spritzgußteile ausgebildet, womit der Forderung nach einer kostengünstigen Herstellung Rechnung getragen wird. Diese Maßnahme bietet zudem den Vorteil, durch Einsatz eingefärbter Kunststoffe in farblicher Hinsicht flexibel zu sein.

Eine bevorzugte Ausgestaltung der Erfindung besteht darin, daß der Gegenlagerzapfen aus einem Kern aus elektrisch leitfähigem Material und aus einem diesen umgebenden Kunststoffkörper, der die Nuten aufweist, besteht, daß eine Halbschale, der Kunststoffkörper und der Kern gemeinsam von zumindest einer Bohrung durchsetzt sind und daß in der Bohrung ein Kontaktniet verankert ist, der einendig eine gewölbte, sich auf der mit einer Bohrung versehenen Halbschale abstützende Kontaktplatte aufweist, wobei der Kern elektrisch mit einem im Sonnenblendenkörper angeordneten elektrischen Verbraucher verbunden und die Kontaktplatte mit einem im Gegenlagerböckchen vorgesehenen Gegenkontakt, der an der Fahrzeugelektrik angeschlossen ist, kontaktierbar ist. Der Kern kann dabei z.B. aus Messing bestehen und der die Nuten aufweisende Kunststoffkörper durch Umspritzen des Kerns gebildet sein.

Diese bevorzugte Ausgestaltung der Erfindung ermöglicht mit relativ einfachen Mitteln, die elektrische Stromversorgung eines im Sonnenblendenkörper vorgesehenen elektrischen Verbrauchers, wobei in erster Linie an eine Beleuchtungseinrichtung gedacht ist, die dazu dient, einen vom Sonnenblendenkörper getragenen Spiegel auch bei Dunkelheit benutzen zu können. Der Stand der Technik (vgl. z.B. die DE-A-27 03 447) lehrt demgegenüber einen wesentlich aufwendigeren Lösungsweg zur elektrischen Stromversorgung eines im Sonnenblendenkörper angeordneten elektrischen Verbrauchers.

Weiterhin kann vorgesehen sein, daß die eine Bohrung aufweisende Halbschale eine den Abmessungen der Kontaktplatte angepaßte Ausnehmung aufweist, in die die Kontaktplatte bodenseitig und damit bereichsweise versenkt eingreift. Schließlich kann eine Weiterbildung der Erfindung noch darin bestehen, daß das freie Ende des Kontaktniets am Austrittsende der Bohrung im Kunststoffkörper verquetscht bzw. zu einem in die Bohrung eingreifenden Nietkopf gestaucht ist und daß das so verformte Kontaktnietende von der zweiten Halbschale abgedeckt ist.

Ausführungsbeispiele der Erfindung werden nunmehr anhand der Zeichnung näher erläutert. Es zeigen

Fig. 1 eine komplette Sonnenblende in Ansicht,

Fig. 2 eine schaubildliche Teilansicht des Gegenlagerbereichs der Sonnenblende nach Fig. 1 mit Hülsenhalbschalen,

Fig. 3 den kompletten Gegenlagerbereich der Sonnenblende nach Fig. 1, ergänzt durch elektrische Kontaktelemente und

Fig. 4 einen Schnitt IV - IV nach Fig. 3.

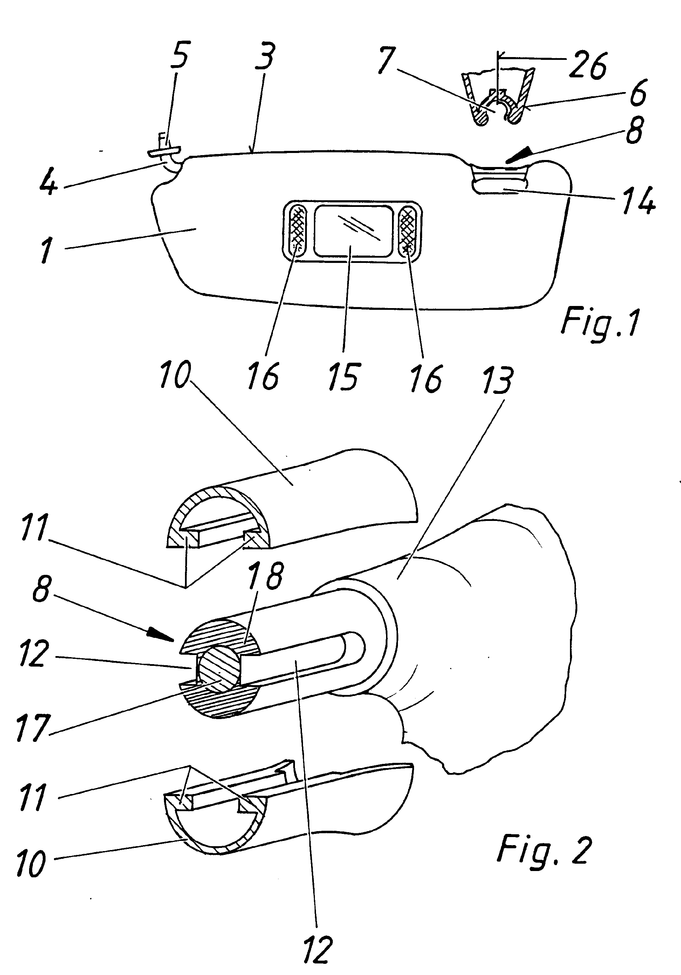

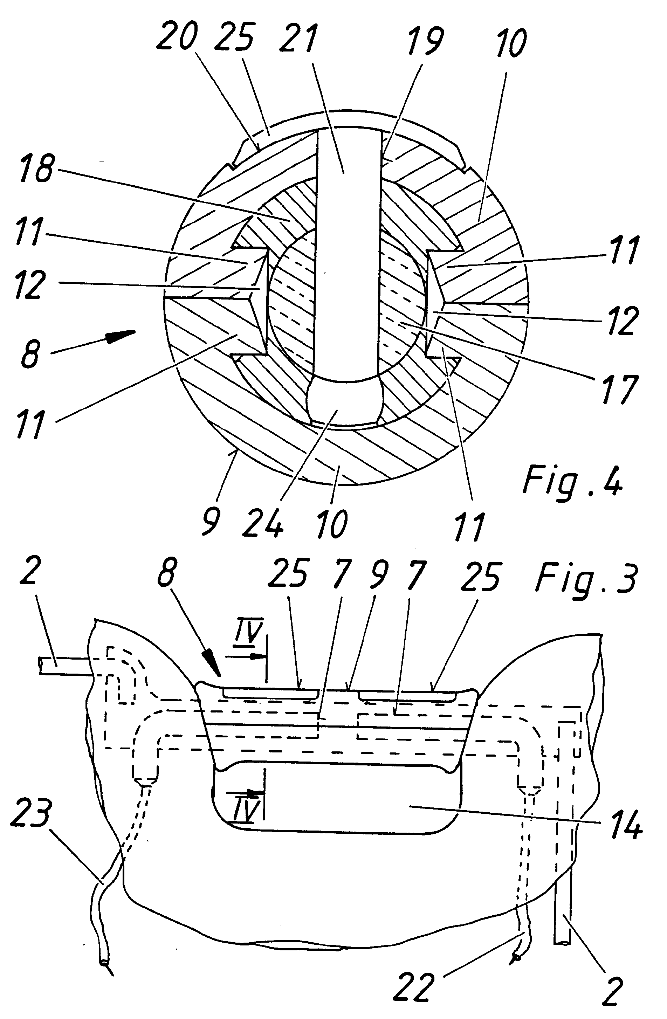

Die neue Sonnenblende besteht aus einem als Polsterkörper ausgebildeten Sonnenblendenkörper 1 mit angenähert rechteckiger Umrißkontur und plattenförmiger Gestalt. Im Innern ist der Sonnenblendenkörper 1 mit einer z.B. aus Draht gebildeten Verstärkungseinlage 2 (Fig. 3) ausgesteift. Im Bereich seiner oberen Längskante 3 weist der Sonnenblendenkörper 1 eine einendig im Sonnenblendenkörper 1 eingelagerte Schwenklagerachse 4 etwa L-förmiger Gestaltung auf, deren anderer Schenkel in einem an einer Fahrzeugkarosserie zu befestigenden Schwenklagerböckchen 5 sitzt. Zeichnungsrechtsseitig in Fig. 1 ist, ebenfalls im Bereich der oberen Längskante 3, ein sogenanntes Gegenlager angeordnet, welches aus einem an der Fahrzeugkarosserie zu befestigenden Gegenlagerböckchen 6 (um 90° verdreht dargestellt) und einem in dessen Lageraufnahme 7 lösbar einrastbaren Gegenlagerzapfen 8 besteht. Die Anordnung des Gegenlagerzapfens 8 ist so getroffen, daß er mit dem im Sonnenblendenkörper 1 sitzenden Schenkel der Schwenklagerachse 4 fluchtet und mit diesem eine gemeinsame Drehachse bildet, um die herum der Sonnenblendenkörper von der Nichtgebrauchslage in die Gebrauchslage und umgekehrt geklappt werden kann.

Der Gegenlagerzapfen 8 ist von einer Hülse 9 umgriffen, die aus zwei Halbschalen 10 besteht, deren Längsränder jeweils einen nach innen gerichteten hakenartigen Fortsatz 11 aufweisen. Die hakenartigen Fortsätze 11 rasten in zwei, am Gegenlagerzapfen 8 vorgesehene, einander diametral gegenüberliegende und sich axial erstreckende Nuten 12 ein und legen damit die Halbschalen 10 der Hülse 9 verliersicher und zuverlässig am Gegenlagerzapfen 8 fest.

Die beiden Endbereiche der Hülse 9 sind kelchfömig aufgeweitet und vermögen damit die Hüllfolienstümpfe 13 der den Sonnenblendenkörper 1 üblicherweise umgebenden Hüllfolie zu übergreifen und einen (vgl. insbesondere Fig. 3) fließenden Übergang im vom Gegenlagerzapfen 8 durchquerten Gegenlagerauge 14 zu erzielen. Die hakenartigen Fortsätze 11 der Halbschalen 10 enden vor den kelchförmigen Erweiterungen und vor den Hüllfolienstümpfen 13 und sind in ihrer Länge der axialen Erstreckung der Nuten 12 angepaßt.

Bei Sonnenblenden, die ohne einen elektrischen Verbraucher, wie eine Lichtquelle, ausgebildet sind, weisen die Halbschalen 10 jeder Hülse 9 jeweils eine identische Gestaltung auf, wie dies in Fig. 2 gezeigt ist. Bei der Montage wird zunächst der Gegenlagerzapfen 8, wie in Fig. 2 gezeigt, von der hier normalerweise befindlichen Hüllfolie befreit und sodann eine obere oder untere Halbschale 10 auf den Gegenlagerzapfen 8 aufgesetzt und durch eine gewisse Druckausübung auf die Halbschale bewirkt, daß die Fortsätze 11 in die Nuten 12 einklipsen und hier verrasten. Mit der zweiten Halbschale 10 wird dann in ebensolcher Weise verfahren.

Andererseits wird bei Sonnenblenden, die mit einer Beleuchtungseinrichtung ausgerüstet sind (Fig. 1 zeigt z.B. neben einem Spiegel 15 angeordnete Lichtfenster 16 einer Beleuchtungseinrichtung) sowohl der Gegenlagerzapfen 8 als auch eine der Halbschalen 10 gegenüber der Normalausführung abgeändert. Der Gegenlagerzapfen 8 besteht dann notwendigerweise (sonst nur alternativ) aus einem Kern 17 aus elektrisch leitfähigem Material, z.B. Messing und aus einem diesen umgebenden Kunststoffkörper 18, der die Nuten 12 aufweist. An einem Ende des Kerns 17 ist ein elektrischer Leiter 22 z.B. durch Anlöten angeschlossen, der zur Lichtquelle im Sonnenblendenkörper 1 hin weitergeführt ist. Sofern der Kern 7, wie in Fig. 3 gezeigt, mittig unterbrochen ist, kann dieser mit zwei elektrischen Leitern 22 und 23 (Pluspol / Minuspol) versehen sein. Der Kunststoffkörper 18 ist durch Umspritzen des Kerns 17 gebildet und vorzugsweise in ebensolcher Weise mit der Verstärkungseinlage 2 verbunden. Eine (im Ausführungsbeispiel die obere) Halbschale 10 weist zumindest eine (im Ausführungsbeispiel sind es zwei) Bohrung 19 und außenseitig um diese herum eine Ausnehmung 20 auf. Die Bohrung 19 und die Ausnehmung 20 können bei der Halbschalenherstellung werkzeugseitig berücksichtig werden, so daß in soweit keine Nachbearbeitung erforderlich ist. Die Bohrung 19 setzt sich durch den Kunststoffkörper 18 und durch den Kern 17 hindurch fort und dient zur Aufnahme und Verankerung eines Kontaktniets 21. Der Kontaktniet 21 ist am Bohrungsaustrittende des Kunststoffkörpers 18 zu einem Nietkopf 24 gestaucht. Am anderen Ende ist der Kontaktniet 21 mit einer gewölbten Kontaktplatte 25 ausgebildet, die in die Ausnehmung 20 der oberen Halbschale teilweise versenkt eingreift.

Bei der Montage wird also zunächst die obere mit Bohrung 19 und Ausnehmung 20 versehene Halbschale 10 auf den Kunststoffkörper 18 aufgeklipst. Alsdann wird die Bohrung 19 durch den Kunststoffkörper 18 und Kern 17 hindurch verlängert, in die Bohrung der Kontaktniet 21 eingebracht und am freien Ende zum Nietkopf 24 verformt. Alsdann wird die zweite (untere) Halbschale 10 auf den Gegenlagerzapfen 8 (Kunststoffkörper 18) aufgeklipst und damit gleichzeitig der Nietkopf 24 abgedeckt. Fig. 3 zeigt den zusammengebauten Zustand. Sofern, wie in Fig. 3 gezeigt, sowohl Pluspol als auch Minuspol über das Gegenlager geführt werden sollen, müssen im Gegenlagerböckchen 6 zwei entsprechende Gegenkontakte 26 vorgesehen werden. Die Kontaktplatten und Gegenkontakte sind zweckmäßigerweise derart angeordnet, daß sie nur dann miteinander kon-

EP 0 371 300 B1

taktieren, wenn sich der Sonnenblendenkörper 1 in seiner heruntergeklappten Gebrauchslage befindet. Im übrigen funktioniert die elektrische Stromversorgung der Lichtquelle od. dgl. im Sonnenblendenkörper 1 wie schon in der DE-OS 27 03 447 beschrieben, so daß hierauf im einzelnen nicht mehr eingegangen werden muß.

**Patentansprüche**

1. Sonnenblende für Fahrzeuge mit einem Sonnenblendenkörper (1), der an einem Endbereich eines seiner Längsränder (3) einen von einer Hülse (9) umgriffenen, lösbar in die Lageraufnahme (7) eines Gegenlagerböckchens (6) einrastbaren Gegenlagerzapfen (8) aufweist, dadurch gekennzeichnet, daß die Hülse (9) aus zwei Halbschalen (10) besteht, deren Längsränder jeweils einen nach innen gerichteten, hakenartigen Fortsatz (11) aufweisen und daß der Gegenlagerzapfen (8) mit zwei einander diametral gegenüberliegenden, axial verlaufenden Nuten (12) versehen ist, in denen die hakenartigen Fortsätze (11) durch Einrasten gehalten sind.

2. Sonnenblende nach Anspruch 1, dadurch gekennzeichnet, daß die aus zwei Halbschalen (10) bestehende Hülse (9) an beiden Endbereichen jeweils eine kelchförmige Erweiterung aufweist.

3. Sonnenblende nach Anspruch 1 oder 2, dadurch gekennzeichnet, daß die Halbschalen (10) als Kunststoff-Spritzgußteile ausgebildet sind.

4. Sonnenblende nach einem oder mehreren der Ansprüche 1 bis 3, dadurch gekennzeichnet, daß der Gegenlagerzapfen (8) aus einem Kern (17) aus elektrisch leitfähigem Material und aus einem diesen umgebenden Kunststoffkörper (18) der die Nuten (12) aufweist, besteht, daß eine Halbschale (10), der Kunststoffkörper (18) und der Kern (17) von zumindest einer Bohrung (19) durchsetzt sind und daß in der Bohrung (19) ein Kontaktniet (21) verankert ist, der einendig eine gewölbte, sich auf der mit einer Bohrung (19) versehenen Halbschale (10) abstützende Kontaktplatte (25) aufweist, wobei der Kern (17) elektrisch mit einem im Sonnenblendenkörper angeordneten elektrischen Verbraucher verbunden und die Kontaktplatte (25) mit einem im Gegenlagerböckchen (6) vorgesehenen Gegenkontakt (26), der an der Fahrzeugelektrik angeschlossen ist, kontaktierbar ist.

5. Sonnenblende nach Anspruch 4, dadurch gekennzeichnet, daß die eine Bohrung (19) aufweisende Halbschale (10) weiterhin eine den Abmessungen der Kontaktplatte (25) angepaßte Ausnehmung (20) aufweist, in die die Kontaktplatte (25) bodenseitig und damit bereichsweise versenkt eingreift.

6. Sonnenblende nach Anspruch 4 oder 5, dadurch gekennzeichnet, daß das freie Ende des Kontaktniets (21) am Austrittsende der Bohrung (19) im Kunststoffkörper (18) verquetscht bzw. zu einem in die Bohrung (19) eingreifenden Nietkopf (24) verformt ist und daß das verformte Kontaktnietende von der zweiten Halbschale (10) abgedeckt ist.

**Claims**

1. A sun visor for vehicles, with a sun visor body (1), which on an end region of one of its longitudinal edges (3) has an end support pivot pin (8) which is embraced by a sleeve (9) and is able to be detachably engaged into the pivot mounting (7) of an end support stud (6), characterised in that the sleeve (9) comprises two half shells (10), the longitudinal edges of which in each case have an inwardly directed hook-like extension (11) and that the end support pivot pin (8) is provided with two grooves (12) lying diametrically opposed to each other and running axially, in which the hook-like extensions (11) are held by engagement.

2. A sun visor according to Claim 1, characterised in that the sleeve (9), comprising two half shells (10), has a cup-shaped widened section in each case at the two end regions.

3. A sun visor according to Claim 1 or 2, characterised in that the half shells (10) are constructed as sprayed die castings of plastics material.

4. A sun visor according to one or more of Claims 1 to 3, characterised in that the end support pivot pin (8) comprises a core (17) of electrically conductive material and a body (18) of plastics material surrounding it, which has the grooves (12), and that one half shell (10), the body (18) of plastics material and the core (17) are penetrated by at least one bore (19) and that in the bore (19) a contact pin (21) is secured, which at one end has a curved contact plate (25) resting on the half shell (10) which is provided with a bore (19), in which the core (17) is electrically connected with an electrical device arranged in the sun visor body, and the contact plate (25) is able to be put in contact with a support contact (26), provided in the end support stud (6), which support contact (26) is connected to the electrics of the vehicle.

5. A sun visor according to Claim 4, characterised in that the half shell (10) having a bore (19) additionally has a recess (20), matched to the dimensions of the contact plate (25), into which recess the contact plate (25) engages on the base side, and hence so as to be partially countersunk.

4

6. A sun visor according to Claim 4 or 5, characterised in that the free end of the contact pin (21) is pressed at the outlet end of the bore (19) in the body (18) of plastics material or respectively is deformed into a rivet head (24) engaging into the bore (19), and that the deformed contact rivet end is covered by the second half shell (10).

## Revendications

1. Pare-soleil pour véhicules, avec un corps de pare-soleil (1), qui présente sur une zone d'extrémité de l'un de ses bords longitudinaux un tourillon de contre-palier (8), entouré par une douille (9), pouvant s'encliqueter de façon démontable dans le logement de palier (7) d'un bloc de contre-palier (6), caractérisé en ce que la douille (9) se compose de deux demi-coquilles (10) dont les bords longitudinaux présentent chacun un prolongement en crochet (1), orienté vers l'intérieur, et que le tourillon de contre-palier (8) est pourvu de deux rainures (12) s'étendant axialement et diamétralement opposées, dans lesquelles les prolongements en crochet (11) sont maintenus par encliquetage.

2. Pare-soleil selon la revendication 1, caractérisé en ce que la douille (9) composée de deux demi-coquilles (10) présente à chacune des deux zones d'extrémité un élargissement en forme de gobelet.

3. Pare-soleil selon la revendication 1 ou 2, caractérisé en ce que les demi-coquilles (10) sont réalisées sous forme de pièces en matière synthétique moulées par injection.

4. Pare-soleil selon l'une ou plusieurs des revendications 1 à 3, caractérisé en ce que le tourillon de contre-palier (8) est composé en un noyau (17) en matériau conducteur de l'électricité et d'un corps en matière synthétique (18), qui l'entoure et présente les rainures (12), qu'une demi-coquille (10), le corps en matière synthétique (18) et le noyau (17) sont traversés par au moins un alésage (19) et que, dans l'alésage (19), est ancré un rivet de contact (21) qui présente à une extrémité une plaque de contact (25) courbée, prenant appui sur la demi-coquille (10) pourvue d'un alésage (19), le noyau (17) étant relié électriquement à un consommateur électrique disposé dans le corps de pare-soleil et la plaque de contact (25) pouvant être mise en contact avec un contre-contact (26), prévu dans le bloc de contre-palier (6) et raccordé au système électrique du véhicule.

5. Pare-soleil selon la revendication 4, caractérisé en ce que la demi-coquille (25) qui présente un alésage (19) présente de plus un évidement (20) adapté aux dimensions de la plaque de contact (25), dans lequel la plaque de contact (25) vient se noyer en contact, du coté du fond et ainsi associé à une zone.

6. Pare-soleil selon la revendication 4 ou 5, caractérisé en ce que l'extrémité libre du rivet de contact (21) est épanouie par écrasement à l'extrémité de sortie de l'alésage (19) dans le corps en matière synthétique (18), respectivement déformée en prenant la forme d'une tête de rivet (24) venant en contact dans l'alésage (19), et que l'extrémité de rivet de contact déformée est recouverte par la deuxième demi-coquille (10).

Fig.1

Fig. 2

Fig.4

Fig.3